# DEMANDE DE BREVET EUROPEEN

(11) **EP 2 579 282 A1**
(43) Date de publication de la demande: **10.04.2013**
(21) Numéro de dépôt: 12178405.2
(22) Date de dépôt: 30.07.2012
(51) Int. Cl.: H01F 37/00, F02N 11/08, H02M 1/12, H01F 27/245

(54) **Circuit de démarreur de véhicule automobile comportant un dispositif de rehaussement de tension et démarreur équipé**

(30) Priorité: 07.10.2011 FR 1159054
(71) Demandeur: VALEO EQUIPEMENTS ELECTRIQUES MOTEUR, 94046 Créteil (FR)
(72) Inventeur: Labbe, Nicolas, 69003 Lyon (FR)

(57) **Abrégé**

Le circuit électrique de démarreur selon l'invention comporte un dispositif de rehaussement de tension de batterie destiné à empêcher une chute de la tension de batterie consécutive à un pic de courant produit par la mise en service du démarreur dans un circuit de puissance de celui-ci. Conformément à l'invention, le dispositif de rehaussement de tension de batterie consiste en un dispositif de filtrage de type inductif qui est monté en série avec un moteur électrique du démarreur et qui comprend une carcasse magnétique (CA6') formée par empilement de tôles en matériau ferreux et des moyens de pré-polarisation inverse du circuit magnétique formé dans la carcasse. Le matériau ferreux des tôles est un acier de type FeSi, FeNi ou FeCo. Selon une forme de réalisation particulière, la carcasse magnétique (CA6') est formée par empilement de tôles disposées en gradins et a une section de forme sensiblement circulaire.

## Description

### DOMAINE TECHNIQUE DE L'INVENTION.

De manière générale, l'invention concerne le domaine des démarreurs pour moteur thermique dans les véhicules automobiles. Plus particulièrement, l'invention concerne la combinaison d'un démarreur et d'un dispositif autorisant un rehaussement de la tension aux bornes de la batterie du véhicule lors de la mise sous tension du démarreur.

### ARRIERE PLAN TECHNOLOGIQUE DE L'INVENTION.

Lors de la mise sous tension d'un démarreur pour assurer le démarrage du moteur thermique du véhicule, il se produit un appel de courant important qui est proche du niveau de courant de court-circuit du démarreur, à savoir, un courant de l'ordre de 1000 A. Cet appel de courant à la mise sous tension du démarreur décroît ensuite en intensité à mesure que l'induit du démarreur, correspondant au rotor de la machine, monte en vitesse.

A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 V en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 V. Pendant le démarrage du moteur thermique, la tension du réseau de bord du véhicule reste ainsi à une valeur suffisante pour garantir le fonctionnement attendu des équipements des véhicules.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées. Cela entraîne une réelle difficulté pour le concepteur car il faudrait pour se situer au-dessus en tension de batterie que le démarreur possède des chutes de tension interne si élevées qu'il n'aurait plus alors la puissance nécessaire pour entraîner à vitesse suffisante le moteur thermique à basse température.

Dans la technique antérieure, des solutions ont été proposées au problème exposé ci-dessus. Une première solution connue de l'entité inventive repose sur l'utilisation de convertisseurs électroniques élévateurs de tension afin d'éviter un niveau de tension trop bas sur le réseau de bord. Un inconvénient majeur de ces convertisseurs réside dans les coûts substantiels qu'ils introduisent.

Une autre solution connue propose de commander le démarreur au moyen de deux relais, une temporisation et une résistance de limitation de courant. Dans une première phase de fonctionnement dont la durée est déterminée par la temporisation, une résistance additionnelle est insérée en série dans le circuit de démarrage et limite le pic de courant initial. Dans une seconde phase de fonctionnement, la résistance additionnelle est sortie du circuit de démarrage afin de permettre le passage d'un courant suffisant dans l'induit du démarreur et d'autoriser une montée en vitesse de celui-ci.

Les documents EP2080897A2 et EP2128426A2 décrivent un démarreur du type ci-dessus. Outre l'inconvénient du coût additionnel qu'implique le relais de commande supplémentaire, la temporisation et la résistance de limitation de courant, l'introduction de ce relais supplémentaire, qui comporte des pièces mécaniques mobiles soumises à usure, a un impact négatif sur la tenue du démarreur en termes de nombre de cycles de démarrage que doit pouvoir supporter sans encombre le démarreur. La tenue du démarreur en nombre de cycles de démarrage est une contrainte particulièrement sévère pour les démarreurs destinés à des systèmes Stop/ Start. En effet, il est demandé à de tels démarreurs de tenir environ 300 000 cycles de démarrage, soit dix fois plus que les 30 000 cycles environ demandés aux démarreurs classiques.

Outre les inconvénients exposés ci-dessus, l'utilisation de cette seconde solution de la technique antérieure peut s'avérer inadaptée lorsque la satisfaction à un gabarit de tension contraignant en termes de temps est demandée par le constructeur automobile. Un tel gabarit comporte généralement un palier bas de tension correspondant au premier seuil de tension indiqué ci-dessus et un palier haut de tension correspondant au second seuil de tension. Une rampe de tension montante est également prévue dans le gabarit entre le palier bas et le palier haut.

Les essais réalisés par l'entité inventive, avec les valeurs usuelles des constructeurs pour la durée du palier bas et la pente de la rampe du gabarit, montrent la difficulté qu'il y a avec cette seconde solution de la technique antérieure de rester dans le gabarit. En effet, il a été constaté un risque de franchissement du gabarit au niveau de sa rampe de tension lorsque la tension de batterie, après s'être redressée une fois le pic initial de courant absorbé, chute à nouveau à la fin de la temporisation, le courant traversant l'induit du démarreur augmentant alors sensiblement du fait la sortie de la résistance de limitation de courant du circuit de démarrage. Après ce franchissement, la tension de batterie peut rester sous le gabarit pendant une certaine durée et ne revenir au-dessus du gabarit qu'après la fin de la rampe de tension montante, alors que l'instant de début du palier haut de tension a déjà été atteint.

Dans le but de supprimer les inconvénients indiqués ci-dessus, l'entité inventive a déjà proposé des perfectionnements aux démarreurs existants de la technique antérieure, notamment pour les applications dans des véhicules automobiles de la fonction d'arrêt/ relance automatique du moteur thermique.

Ces perfectionnements ont consisté, de manière générale, à monter un dispositif de filtrage de type inductif en série avec le moteur électrique dans le circuit de puissance du démarreur, de façon à empêcher une chute de la tension de batterie consécutive à un pic de courant produit par la mise en service du moteur électrique.

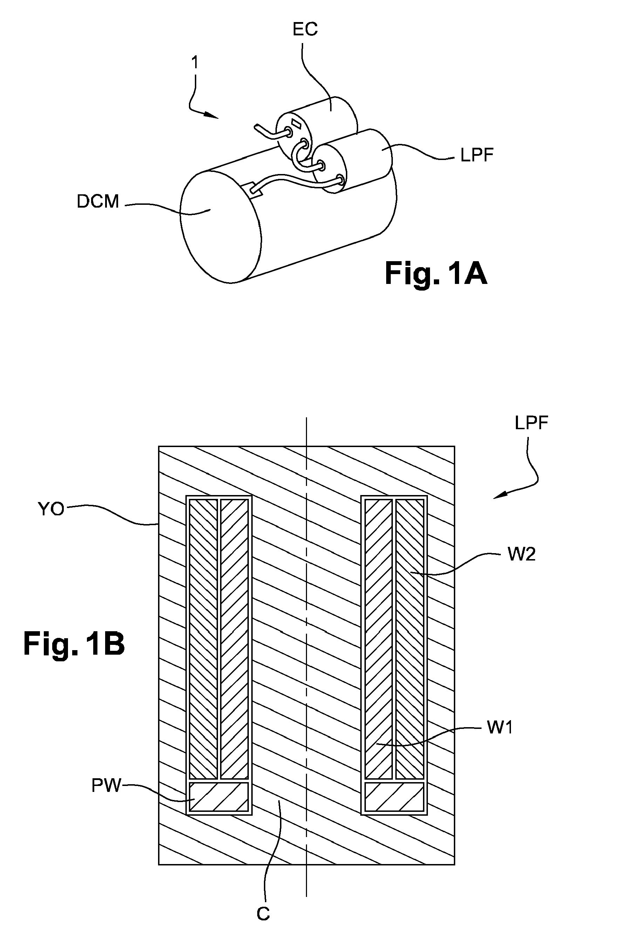

Des essais réalisés par l'entité inventive ont ensuite montré que malgré le fait que le pic de courant soit atténué, le courant de puissance alimentant le démarreur peut croître rapidement dès que la saturation du circuit magnétique du dispositif de filtrage est atteinte. L'entité inventive a alors proposé une forme de réalisation du dispositif de filtrage, telle que celle montrée à la **Figure 1B** sous la forme d'un transformateur cuirassé, qui est munie d'une pré-polarisation inverse de son circuit magnétique, c'est-à-dire, une pré-polarisation ayant un effet magnétique opposé à celui d'un circuit d'enroulement primaire du dispositif. Cette pré-polarisation inverse a pour effet de retarder l'apparition du phénomène de saturation et améliore les performances du dispositif.

De nouvelles études menées récemment par l'entité inventive ont permis d'optimiser encore davantage les formes de réalisation de ces perfectionnements.

### DESCRIPTION GENERALE DE L'INVENTION.

La présente invention concerne une combinaison dans un circuit électrique de démarreur d'un véhicule automobile d'un démarreur et d'un dispositif de rehaussement de tension de batterie, le démarreur comprenant un moteur électrique et un contacteur électromagnétique, le dispositif de rehaussement de tension de batterie étant destiné à empêcher une chute de la tension de batterie consécutive à un pic de courant produit par la mise en service dans un circuit de puissance du démarreur.

Conformément à l'invention, le dispositif de rehaussement de tension de batterie consiste en un dispositif de filtrage de type inductif qui est monté en série avec le moteur électrique dans le circuit de puissance, qui comprend au moins un circuit d'enroulement secondaire en court-circuit et qui comprend une carcasse magnétique formée par empilement de tôles en matériau ferreux et des moyens de pré-polarisation inverse du circuit magnétique formé dans la carcasse.

Selon une forme de réalisation particulière, le matériau ferreux des tôles est un acier de type FeSi.

Selon une autre forme de réalisation particulière, le matériau ferreux des tôles est un acier FeNi ou FeCo.

Selon encore une autre forme de réalisation particulière, les moyens de pré-polarisation inverse comportent au moins une bobine placée sur un bras de la carcasse magnétique.

Selon encore une autre forme de réalisation particulière, les moyens de pré-polarisation inverse comportent au moins un aimant permanent inséré dans la carcasse magnétique.

Selon une caractéristique particulière, la carcasse magnétique a une section de forme sensiblement carrée ou rectangulaire.

Selon une autre caractéristique particulière, la carcasse magnétique est formée par empilement de tôles disposées en gradins et a une section de forme sensiblement circulaire ou demi-circulaire.

Selon encore une autre caractéristique particulière, la carcasse magnétique comporte des tôles en U, L ou I.

Selon encore une autre caractéristique particulière, la carcasse magnétique comporte des tôles en E.

Selon une forme de réalisation particulière, le dispositif de filtrage est fixé sur un carter extérieur du démarreur.

Ces quelques spécifications essentielles auront rendu évidents pour l'homme de métier les avantages supplémentaires obtenus grâce à l'optimisation par l'entité inventive de son dispositif de filtrage de type inductif.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1A** est une vue en perspective montrant une combinaison d'un démarreur et d'un dispositif de filtrage de type inductif du genre mis au point antérieurement par l'entité inventive.
La **Figure 1** **B** est une vue en coupe axiale d'un dispositif de filtrage de type inductif, sous la forme d'un transformateur cuirassé équipé d'un circuit d'enroulement de pré-polarisation inverse, du genre mis au point antérieurement par l'entité inventive.
La **Figure 2** est un schéma de principe d'un circuit électrique de démarreur comprenant un dispositif de filtrage de type inductif avec circuit d'enroulement de pré-polarisation inverse.
Les **Figures 3A** à **3C** montrent une première forme de réalisation du dispositif de filtrage selon l'invention. La **Figure 3A** est une vue en perspective de cette première forme de réalisation. Les **Figures 3B** et **3C** sont respectivement une vue de principe montrant une configuration de circuits d'enroulement montés dans cette première forme de réalisation et un schéma électrique correspondant montrant la manière dont sont connectés électriquement ces circuits d'enroulement.
La **Figure 4** est une vue en perspective d'une seconde forme de réalisation du dispositif de filtrage selon l'invention, incorporant un aimant permanent pour la pré-polarisation inverse du circuit magnétique du dispositif.
Les **Figures 5A** et **5B** montrent une troisième forme de réalisation du dispositif de filtrage selon l'invention. Les **Figures 5A** et **5B** sont respectivement une vue de principe montrant une configuration de circuits d'enroulement montés dans cette troisième forme de réalisation et un schéma électrique correspondant montrant la manière dont sont connectés électriquement ces circuits d'enroulement.
Les **Figures 6A** à **6D** montrent quatre assemblages de tôles en U, I, L et E utilisables dans différentes formes de réalisation pour former le circuit magnétique du dispositif de filtrage selon l'invention.
Les **Figures 7A,** 7B et **7C** montrent des formes de réalisation du dispositif de filtrage selon l'invention avec des carcasses obtenues par empilements de tôles en gradins. Les **Figures 7A** et **7B** sont des vues simplifiées de face et en coupe, selon un plan de coupe AA, d'une forme de réalisation avec une section de carcasse sensiblement demi-circulaire. La **Figure 7C** est une vue en perspective d'une réalisation pratique d'une carcasse obtenue par empilements de tôles en gradins ayant une section sensiblement circulaire.

### DESCRIPTION DE FORMES DE REALISATION PARTICULIERES DE

### L'INVENTION.

La **Figure 1** montre une combinaison 1 d'un démarreur, comprenant un moteur électrique à courant continu DCM et un contacteur électromagnétique EC, et d'un dispositif de filtrage LPF de type inductif sur lequel ont porté les efforts d'optimisation de l'entité inventive.

Dans cette réalisation, le dispositif de filtrage LPF est fixé mécaniquement à un carter extérieur du démarreur, à proximité du contacteur EC.

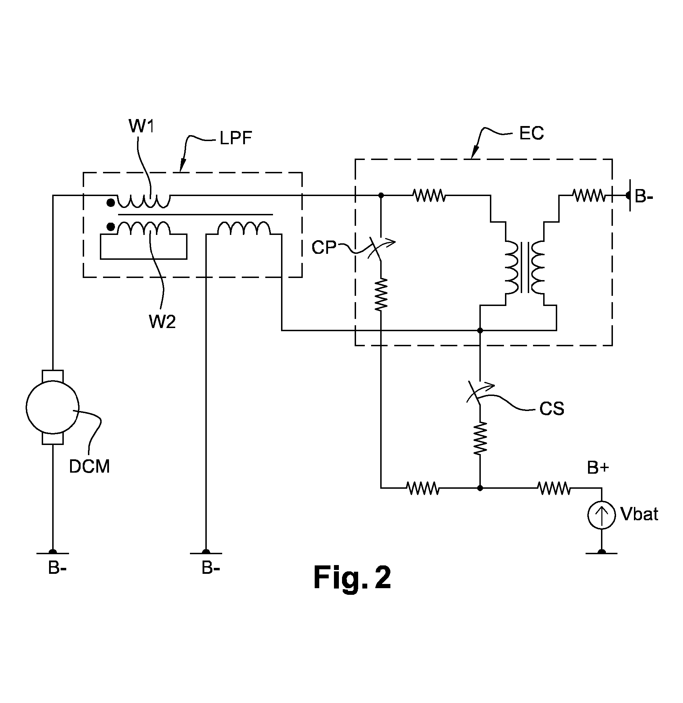

Les liaisons électriques entre le dispositif de filtrage LPF, le contacteur EC et le moteur électrique DCM sont montrées à la Figure **2****.**

Le dispositif de filtrage LPF est électriquement monté en série entre le contact de puissance CP du contacteur EC et le moteur DCM.

Dans une forme de réalisation alternative (non représentée), le dispositif de filtrage LPF n'est pas intégré dans le démarreur EC, DCM, mais est inséré dans le circuit de puissance entre la borne positive B+ de la batterie et le contact de puissance CP.

Le contacteur EC est ici un contacteur classique de démarreur, à simple contact de puissance CP, et comprend un solénoïde formé d'une bobine d'appel et d'une bobine de maintien.

La fermeture d'un contact de démarrage CS du véhicule commande l'excitation des bobines d'appel et de maintien, et l'activation du démarreur selon un séquencement bien connu de l'homme du métier et qui ne sera pas détaillé ici.

Le fort pic initial de courant mentionné plus haut intervient à la fermeture du contact de puissance CP, lorsque le moteur DCM est alimenté à pleine puissance. La fermeture du contact de puissance CP provoque également la circulation dans le dispositif de filtrage LPF d'un courant de puissance alimentant le moteur DCM.

Comme montré par son schéma électrique représenté à la **Figure 2****,** le dispositif de filtrage LPF est ici un dispositif de type inductif qui est réalisé ici sous la forme d'un transformateur ayant des circuits d'enroulement primaire W1, secondaire W2 et de pré-polarisation inverse PW qui sont couplés magnétiquement

Le circuit d'enroulement primaire W1 est celui qui est inséré dans le circuit de puissance du démarreur. Le circuit d'enroulement secondaire W2 est court-circuité.

Typiquement, l'inductance équivalente du dispositif de filtrage inductif LPF est comprise entre 0,1 et 10 mH environ pour des courants ayant un ordre de grandeur de 300 à 1000 A.

L'effet de rehaussement de la tension de batterie obtenu découle du fait qu'à la mise sous tension du moteur DCM, le pic initial de courant est coupé (atténué d'environ la moitié) en raison de la production de forts courants induits dans le circuit secondaire W2 court-circuité, qui s'opposent à la brutale variation de flux magnétique qui les génère.

Comme montré à la **Figure 2****,** le circuit d'enroulement de pré-polarisation inverse PW est connecté entre la borne négative B- de la batterie et le contact de démarrage CS du véhicule.

Ce câblage permet l'établissement d'un courant en régime permanent dans le circuit d'enroulement de pré-polarisation inverse PW en même temps que l'excitation des bobines d'appel et de maintien du contacteur électromagnétique EC, c'est-à-dire environ 25 ms avant la fermeture du circuit de puissance par le contact de puissance CP.

En référence également à la **Figure 1B**, montrant une forme de réalisation du dispositif de filtrage LPF sous la forme d'un transformateur cuirassé, le dispositif de filtrage LPF comprend une carcasse C, YO en matériau magnétique tel que l'acier, et les circuits d'enroulement primaire W1, secondaire W2 et de pré-polarisation inverse qui sont en cuivre. La carcasse comprend une culasse cylindrique YO et un noyau axial C autour duquel sont agencés les circuits d'enroulement W1, W2. Le circuit d'enroulement de pré-polarisation inverse PW est bobiné en sens inverse du circuit d'enroulement primaire W1 autour du noyau axial C à une première extrémité des enroulements primaire et secondaire W1, W2.

La pré-polarisation inverse du circuit magnétique YO, C avant l'établissement en transitoire du courant de puissance traversant le moteur électrique DCM permet de bénéficier d'une plus grande variation d'induction ce qui permet de retarder la saturation. Le moteur électrique DCM peut ainsi atteindre une vitesse de rotation plus élevée, et génère donc une force contre-électromotrice plus élevée, au moment de la saturation, ce qui contribue à limiter le courant de puissance.

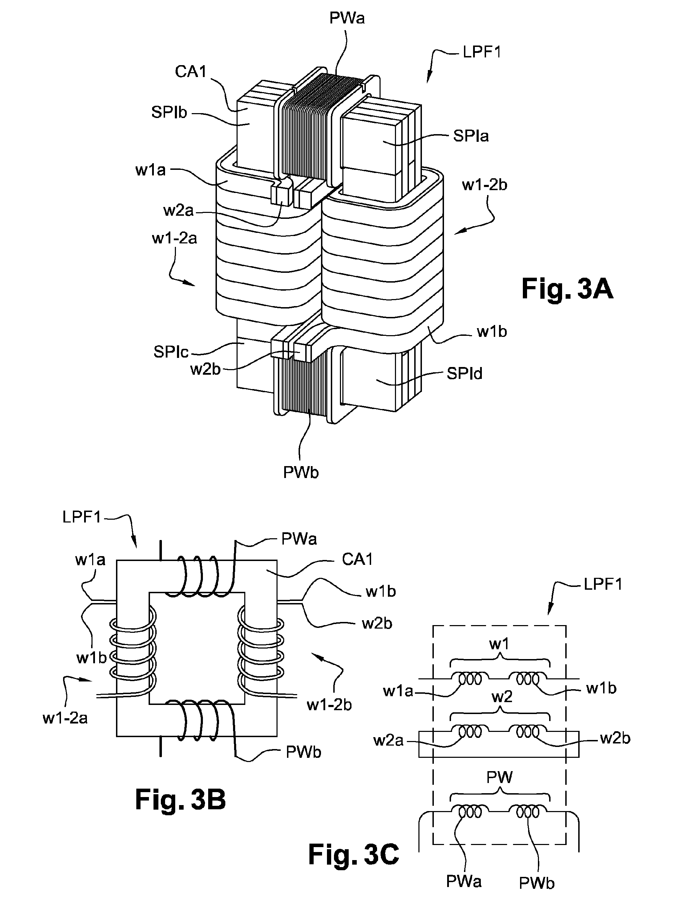

En référence aux **Figures 3A** à **3C****,** il est maintenant décrit une première forme de réalisation LPF1 du dispositif de filtrage optimisé selon l'invention.

Comme montré aux **Figures 3A** et **3B****,** le dispositif LPF1 selon cette première forme de réalisation comporte essentiellement une carcasse CA1 en matériau magnétique ferreux, en forme de cadre, et des bobines de fils conducteurs W1-2a, W1-2b et PWa, PWb.

La carcasse CA1 est réalisée par empilement de tôles. Concrètement, la carcasse CA1 est formée par association de quatre empilements de tôles SPIa à SPId en forme de I. Les quatre empilements de tôles SPIa à SPId ont des configurations identiques et ne diffèrent dans le cadre de carcasse que par leur orientation. Un seul type de tôle est nécessaire pour réaliser l'ensemble du cadre. Les empilements en I comportent chacun quatre tôles identiques, disposées en décalage longitudinal entre tôles jointives de manière à permettre une imbrication des extrémités de tôles au niveau des angles du cadre.

Les essais réalisés par l'entité inventive ont montré que la carcasse magnétique CA1 est bien adaptée pour des tôles en matériau anisotrope. L'acier électrique conventionnel Fer-Silicium (FeSi) à grains orientés (GO) ou non-orientés (NO) donne de bons résultats. Cependant, les aciers spéciaux Fer-Nickel (FeNi) et Fer-Cobalt (FeCo) pourront également convenir dans certaines applications.

Typiquement, dans cette forme de réalisation de la carcasse magnétique ainsi que les autres formes décrites par la suite, les tôles sont maintenues entre-elles par collage, rivetage, poinçonnage, soudure, cerclage ou surmoulage dans de la résine. L'assemblage de la carcasse magnétique devra être effectué avec le plus grand soin de manière à éviter tout entrefer non voulu au niveau des extrémités de tôle en recouvrement.

Typiquement, les bobines W1-2a, W1-2b et PWa, PWb sont faites à partir de fils de cuivre émaillé, c'est-à-dire, isolés électriquement par vernis, offrant une faible résistance électrique et une bonne isolation électrique entre spires jointives. En variante, du fil d'aluminium oxydé en surface pourra être utilisé dans certaines formes de réalisation pour une ou plusieurs de ces bobines.

Dans cette forme de réalisation, les bobines W1-2a et W1-2b sont insérées respectivement dans les portions de plus grande longueur des empilements de tôles en L. Les bobines PWa et PWb sont insérées respectivement dans les portions de plus petite longueur des empilements de tôles en L.

Dans cette forme de réalisation, les bobines W1-2a, W1-2b sont formées chacune de deux conducteurs méplats, parallèles et jointifs (conducteurs w1 a, w2a pour W1-2a et w1b, w2b pour W1-2b, visibles à la **Figure 3A****).** Un isolant de bobine (non représenté dans les figures) est généralement inséré entre les conducteurs w1 a, w1 b et la carcasse CA1, de manière à protéger ces conducteurs d'un court-circuit en cas de détérioration du vernis isolant à la surface des conducteurs.

Les conducteurs w1 a, w2a sont bobinés les deux conducteurs en main sur une seule couche de manière à former la bobine W1-2a. La bobine W1-2b est formée comme W1-2a, en bobinant les deux conducteurs en main w1b, w2b sur une seule couche.

Les bobines PWa et PWb sont réalisées ici en enroulant du fil de cuivre fin sur un support isolant de bobine.

Comme montré à la **Figure 3C****,** le circuit d'enroulement primaire W1 du dispositif LPF1 est formé par la connexion en série des deux portions d'enroulement réalisées avec les conducteurs w1a et w1b dans les bobines W1-2a et W1-2b. Le circuit d'enroulement secondaire W2 du dispositif LPF1 est formé par la connexion en série des deux portions d'enroulement réalisées avec les conducteurs w2a et w2b dans les bobines W1-2a et W1-2b et par la mise en court-circuit du circuit d'enroulement ainsi constitué. Le circuit d'enroulement de pré-polarisation inverse PW est formé par la connexion en série des bobines PWa et PWb.

On notera, en variantes de réalisation, que les bobines W1-2a et W1-2b pourront être formées d'un nombre de conducteurs méplats supérieur à deux. Le choix du nombre de conducteurs peut être dicté par une contrainte de courbure importante ou par la nécessité de limiter l'influence de l'effet de peau.

De plus, dans certaines variantes, les bobines W1-2a et W1-2b pourront être formées en un nombre de couches supérieur à deux.

Les essais réalisés par l'entité inventive ont mis en évidence le fait qu'il est souvent préférable du point de vu thermique que la ou les couches du circuit d'enroulement secondaire W2 soient situées sur la partie extérieure des bobines W1-2a, W1-2b. Cependant, dans certaines applications, une disposition du circuit d'enroulement secondaire W2 dans la partie intérieure des bobines W1-2a, W1-2b peut s'avérer être le meilleur compromis.

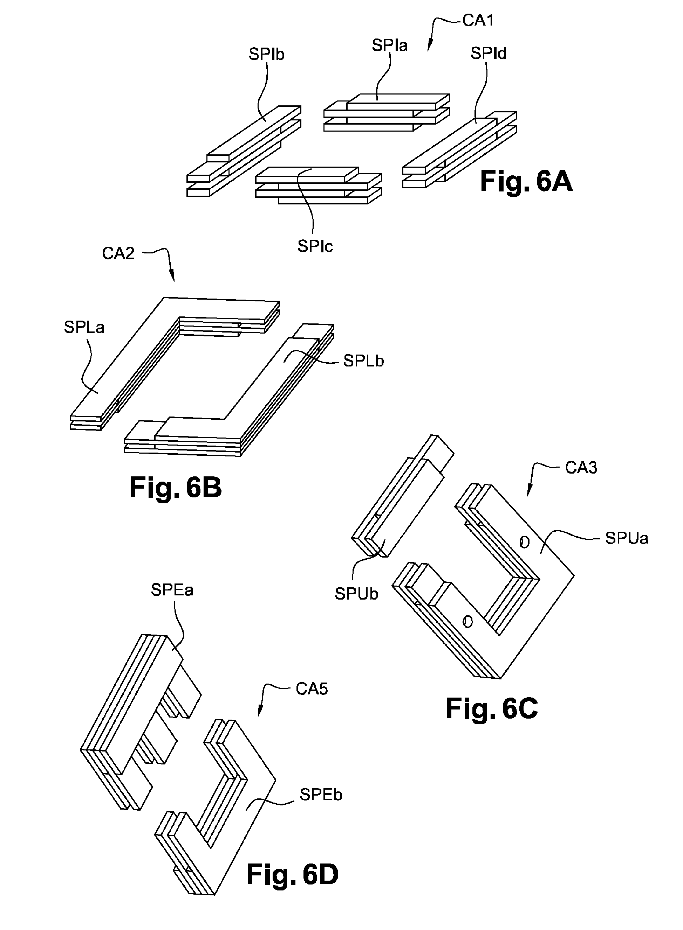

On notera également que la carcasse magnétique CA1 peut, selon les applications du dispositif de filtrage selon l'invention, être réalisée de manière différente, comme montré aux **Figures 6B** et **6C****.** Selon le cas, des tôles en matériau anisotrope ou isotrope pourront être utilisées. L'acier électrique conventionnel Fer-Silicium (FeSi) à grains orientés (GO) ou non-orientés (NO), selon le cas, donne de bons résultats. Cependant, les aciers spéciaux Fer-Nickel (Fe-Ni) et Fer-Cobalt (FeCo) pourront aussi être utilisés dans certaines applications.

A la **Figure 6B****,** une carcasse magnétique CA2 en forme de cadre est formée par association réalisée à partir de deux empilements de tôles SPLa et SPLb, en forme de L. Deux types de tôles sont nécessaires pour réaliser l'ensemble du cadre. Dans cet exemple, chaque empilement en L comprend deux tôles d'un premier type et deux tôles d'un second type, soit quatre tôles au total. Les tôles du second type ont des petite et grande longueurs du L inférieures à celles des tôles du premier type. L'empilement SPLa, SPLb, est réalisé en disposant en alternance les premier et second types de tôles. L'assemblage des extrémités des empilements de tôles SPLa, SPLb est fait de manière imbriquée, les extrémités des tôles des empilements SPLa, SPLb se recouvrant alternativement l'une l'autre.

A la **Figure 6C****,** une carcasse magnétique CA3 également en forme de cadre est formée par association d'un empilement de tôles SPUa en forme de U et d'un empilement de tôles SPUb en forme de I. Deux types de tôles sont nécessaires pour réaliser l'ensemble du cadre. Dans cet exemple, l'empilement en I comporte trois tôles identiques dont une centrale qui est décalée longitudinalement, et l'empilement en U comporte également trois tôles identiques avec des branches parallèles formant le U de longueur différente. Une tôle centrale de l'empilement en U est disposée en étant pivotée de 180° par rapport aux deux tôles adjacentes. La disposition des tôles I et U décrite ci-dessus et les longueurs différentes des branches du U permettent l'imbrication des extrémités de tôles du cadre.

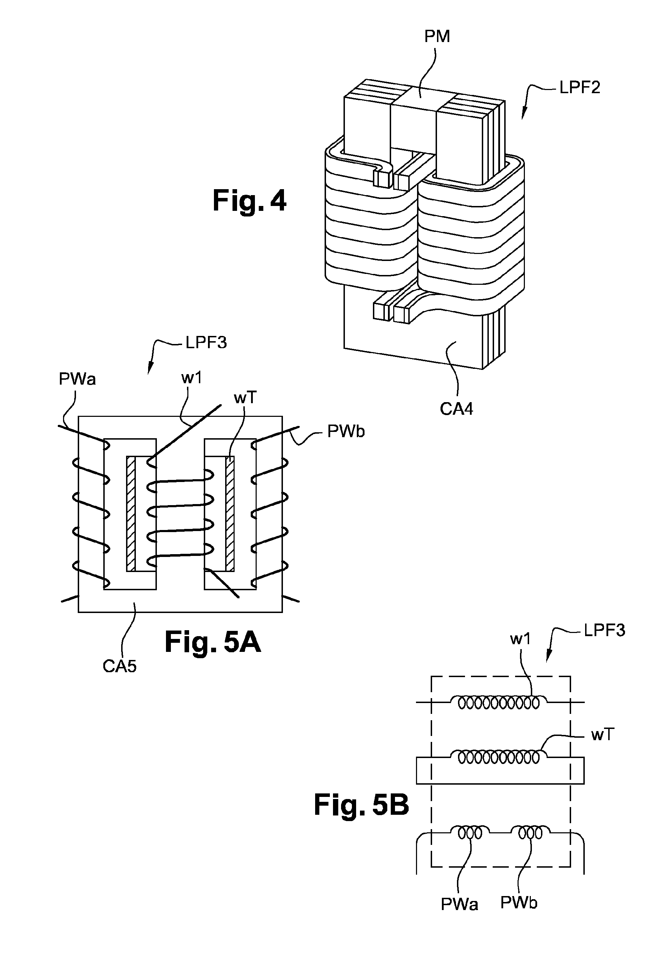

La **Figure 4** montre une vue en perspective d'une seconde forme de réalisation LPF2 du dispositif de filtrage selon l'invention.

Dans le dispositif de filtrage LPF2, la pré-polarisation inverse du circuit magnétique est obtenue au moyen d'un aimant permanent PM inséré dans la carcasse magnétique CA4 du dispositif. Cette forme de réalisation ne comporte donc pas de bobine de pré-polarisation inverse PW.

La carcasse magnétique CA4 est formée ici d'un empilement de quatre tôles en U. La partie ouverte du U est occupée par l'aimant PM qui a une section sensiblement identique à celle de la carcasse magnétique CA4.

Comme indiqué plus haut, l'acier FeSi, en GO ou NO, donne de bons résultats pour les tôles. Cependant, dans certaines applications, il n'est pas exclu d'utiliser des tôles en FeNi ou FeCo.

Une troisième forme de réalisation LPF3 du dispositif de filtrage selon l'invention est montrée aux **Figures 5A** et **5B****.**

Le dispositif de filtrage LPF3 se distingue essentiellement par la présence d'une carcasse magnétique CA5 formant un double cadre et par un circuit d'enroulement secondaire réalisé au moyen d'un tube.

Le tube est réalisé dans un matériau conducteur électrique, typiquement le cuivre ou l'aluminium. Ce tube forme le circuit d'enroulement secondaire WT court-circuité.

Par ailleurs, le dispositif de filtrage LPF3 comporte un circuit d'enroulement primaire W1 qui est formé par la bobine W1 montée sur la barre centrale. Le dispositif LPF3 comporte également un circuit d'enroulement de pré-polarisation inverse PW qui est formé par la connexion en série de bobines PWa et PWb.

Comme montré à la **Figure 6D****,** la carcasse magnétique CA5 est formée de deux empilements de tôles SPEa et SPEb. Chaque empilement SPEa, SPEb comporte deux tôles en E et deux tôles en I, disposées alternativement. Les tôles E et I sont disposées dans les empilements de telle manière à assurer un recouvrement des tôles entre elles au niveau de leurs extrémités, comme déjà décrit plus haut. Les tôles en I autorisent une fermeture des ouvertures des tôles en E de manière à former le double cadre de la carcasse CA5. L'alliage ferreux FeSi pourra être utilisé pour ces tôles, mais non exclusivement.

Dans les formes de réalisation LPF1 à LPF3, les carcasses magnétiques en tôles empilées CA1 à CA5 telles que décrites permettent d'obtenir une section de noyau magnétique de forme carrée ou rectangulaire.

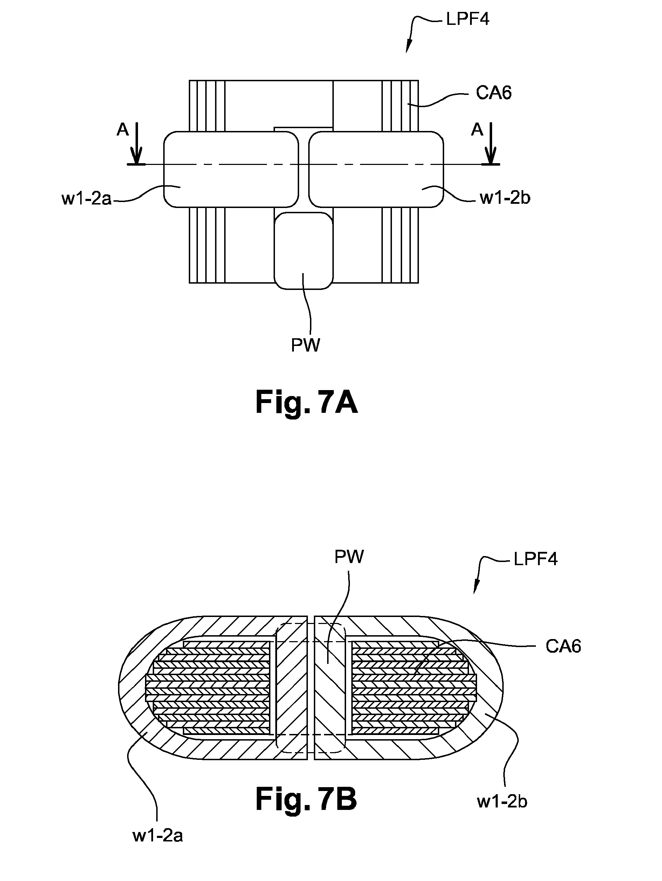

Dans la forme de réalisation LPF4 du dispositif de filtrage selon l'invention qui est maintenant décrite en référence aux **Figures 7A** et **7B****,** la carcasse magnétique CA6 a une section de forme sensiblement demi-circulaire. Cette section demi-circulaire autorise une optimisation des enroulements de conducteurs autour du noyau magnétique. Il en découle une plus grande compacité du dispositif ainsi qu'une réduction des résistances électriques des bobinages due à une longueur moindre des conducteurs.

Comme cela apparaît aux **Figures 7B****,** la forme sensiblement demi-circulaire de la section de la carcasse CA6 est ici obtenue par des empilements des tôles en gradins. Différentes largeurs de tôle seront donc nécessaires pour réaliser ces empilements en gradins.

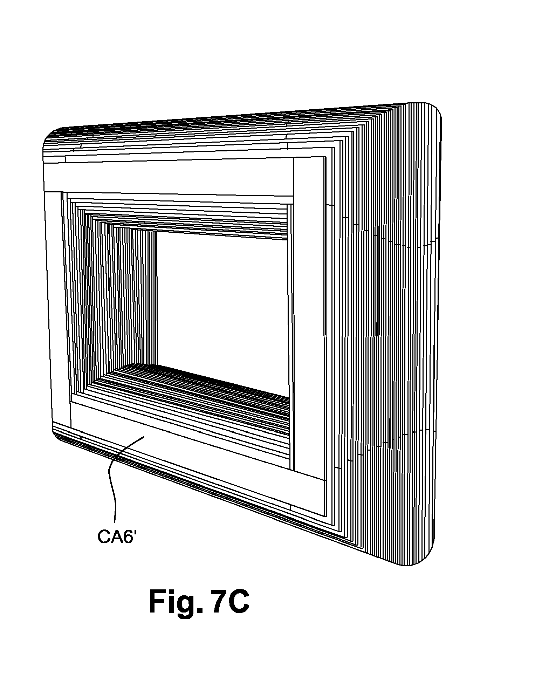

Comme montré à la **Figure 7C****,** en variante de réalisation, une carcasse CA6' ayant une section de forme sensiblement circulaire peut également être obtenue par empilements des tôles en gradins.

Dans cette forme de réalisation LPF4, on notera également la présence d'une seule bobine pour le circuit d'enroulement de pré-polarisation inverse PW. Les bobines W1-2a et W1-2b sont réalisées de manière similaire à celles de LPF1, de façon à obtenir les circuits d'enroulement primaire W1 et secondaire W2.

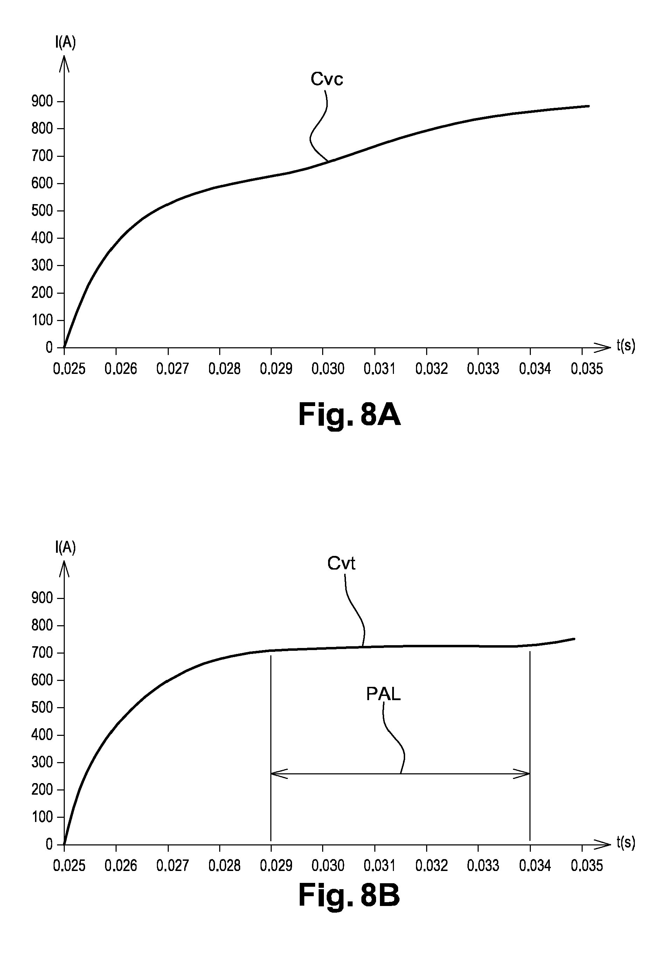

Les courbes Cvc et Cvt montrées respectivement aux **Figures 8A** et **8B** montrent des évolutions dans le temps du courant de puissance I à travers le moteur DCM pour le dispositif de filtrage à transformateur cuirassé de la **Figure 1** **B** et le dispositif de filtrage optimisé LPF1 selon l'invention **(****Figures 3A à 3C****).**

Pour ce comparatif, les deux dispositifs LPF ont été choisis avec une même section fer S_{Fer}=314 mm² pour le noyau magnétique et un même nombre de spires n1=n2 = 18 spires pour les enroulements primaire et secondaire. La carcasse magnétique du dispositif à transformateur cuirassé a été réalisée en acier XC10 et la carcasse magnétique du dispositif LPF1 a été réalisée avec des tôles en FeSi, du type M165-35S.

Dans les courbe Cvc et Cvt, le phénomène de saturation magnétique apparaît respectivement au bout d'un temps τ_{vc}= 4,4 ms et d'un temps τᵥₜ = 9,2 ms. Outre ce retard dans l'apparition de la saturation magnétique, l'invention procure également un effet de palier sur l'évolution du courant de puissance I, comme montré par la portion repérée PAL dans la courbe Cvt de la **Figure 8****B.** On notera que l'existence de cet effet de palier PAL, qui maintient l'intensité du courant de puissance I à une valeur quasi-constante pendant une durée déterminée (de l'ordre de 5 ms dans la courbe Cvt), facilite le calage du dispositif pour une application donnée.

## Revendications

1. Combinaison (1) dans un circuit électrique de démarreur d'un véhicule automobile d'un démarreur (DCM, EC) et d'un dispositif de rehaussement de tension de batterie, ledit démarreur (DCM, EC) comprenant un moteur électrique (DCM) et un contacteur électromagnétique (EC), ledit dispositif de rehaussement de tension de batterie étant destiné à empêcher une chute de la tension de batterie (Vbat) consécutive à un pic de courant produit par la mise en service dans un circuit de puissance dudit démarreur (DCM, EC), **caractérisée en ce que** ledit dispositif de rehaussement de tension de batterie consiste en un dispositif de filtrage de type inductif (LPF1 à LPF4) qui est monté en série avec ledit moteur électrique (DCM) dans ledit circuit de puissance, qui comprend au moins un circuit d'enroulement secondaire (W2) en court-circuit et qui comprend une carcasse magnétique (CA1 à CA6, CA6') formée par empilement de tôles en matériau ferreux et des moyens de pré-polarisation inverse (PW, PM) du circuit magnétique formé dans ladite carcasse (CA1 à CA6, CA6').

2. Combinaison selon la revendication 1, **caractérisée en ce que** ledit matériau ferreux des tôles est un acier de type FeSi.

3. Combinaison selon la revendication 1, **caractérisée en ce que** ledit matériau ferreux des tôles est un acier FeNi ou FeCo.

4. Combinaison selon la revendication 2 ou 3, **caractérisée en ce que** lesdits moyens de pré-polarisation inverse comporte au moins une bobine (PW) placée sur un bras de ladite carcasse magnétique.

5. Combinaison selon la revendication 2 ou 3, **caractérisée en ce que** lesdits moyens de pré-polarisation inverse comporte au moins un aimant permanent (PM) inséré dans ladite carcasse magnétique.

6. Combinaison selon l'une quelconque des revendications 2 à 5, **caractérisée en ce que** ladite carcasse magnétique a une section de forme sensiblement carrée ou rectangulaire.

7. Combinaison selon l'une quelconque des revendications 2 à 5, **caractérisée en ce que** ladite carcasse magnétique est formée par empilement de tôles disposées en gradins et a une section de forme sensiblement circulaire (CA6') ou demi-circulaire (CA6).

8. Combinaison selon l'une quelconque des revendications 2 à 7, **caractérisée en ce que** ladite carcasse magnétique comporte des tôles en U, L ou I.

9. Combinaison selon l'une quelconque des revendications 2 à 7, **caractérisée en ce que** ladite carcasse magnétique comporte des tôles en E.

10. Combinaison selon la revendication 1, **caractérisée en ce que** ledit dispositif de filtrage (LPF1 à LPF4) est fixé sur un carter extérieur dudit démarreur (DCM, EC).
